# EUROPÄISCHE PATENTSCHRIFT

(11) **EP 1 249 016 B1**
(45) Veröffentlichungstag und Bekanntmachung des Hinweises auf die Patenterteilung: **10.09.2003**
(21) Anmeldenummer: 00990778.3
(22) Anmeldetag: 15.12.2000
(51) Int. Cl.: G10L 17/00

(54) **VERFAHREN ZUR SPRACHGESTEUERTEN IDENTIFIZIERUNG DES NUTZERS EINES TELEKOMMUNIKATIONSANSCHLUSSES IM TELEKOMMUNIKATIONSNETZ BEIM DIALOG MIT EINEM SPRACHGESTEUERTEN DIALOGSYSTEM**
METHOD FOR THE VOICE-OPERATED IDENTIFICATION OF THE USER OF A TELECOMMUNICATION LINE IN A TELECOMMUNICATIONS NETWORK DURING AN INTERACTIVE COMMUNICATION USING A VOICE-OPERATED CONVERSATIONAL SYSTEM
PROCEDE D'IDENTIFICATION COMMANDEE PAR LA PAROLE DE L'UTILISATEUR D'UNE CONNEXION DE TELECOMMUNICATION DANS UN RESEAU DE TELECOMMUNICATION LORS D'UN DIALOGUE AVEC UN SYSTEME DE DIALOGUE COMMANDE PAR LA PAROLE

(30) Priorität: 06.01.2000 DE 10000973
(43) Veröffentlichungstag der Anmeldung: 16.10.2002
(73) Patentinhaber: Deutsche Telekom AG, 53113 Bonn (DE)
(72) Erfinder: RUNGE, Fred, 15838 Wünsdorf (DE); MÜLLER, Christel, 15732 Schulzendorf (DE); TRINKEL, Marian, 52372 Kreuzau OT Untermaubach (DE); ZIEM, Thomas, 16341 Zepernick (DE)
(86) Internationale Anmeldenummer: EP0012850
(87) Internationale Veröffentlichungsnummer: WO01050455

(56) Entgegenhaltungen:
- EP-A- 0 892 388
- WO-A-98/16906
- DE-A- 19 841 166
- US-A- 5 960 392

## Beschreibung

Die Erfindung bezieht sich auf die sprachgesteuerte Identifizierung eines Nutzers eines Telekommunikationsanschlusses aus einer begrenzten Nutzergruppe nach dem Oberbegriff des Anspruchs 1.

Bekannt ist es, die Identifizierung eines Telekommunikationsanschlusses über die in verschiedenen Telekommunikationsnetzen übermittelte Anschlusskennung CLI (Calling Line Identification ) oder ANI ( Automatic Number Identification) vorzunehmen.

Die Unterscheidung einzelner Nutzer, beispielsweise mehrerer Nutzer eines Telekommunikationsanschlusses, ist durch Abfrage einer personengebundenen Kennung, wie beispielsweise einer PIN, möglich. Die PIN ist eine persönliche Geheimnummer, mit der sich der Nutzer gegenüber dem System ausweist.

Sprachverarbeitungssysteme, welche dazu verwendet werden, Schaltvorrichtungen, Computer oder Telekommunikationsanschlüsse zu steuern, gehören ebenfalls zum bekannten Stand der Technik.

Bei Spracherkennungssystemen wird der Inhalt der gesprochenen Äußerung erkannt. Sprechererkennungssysteme (dazu gehören Sprecherverifikationssysteme, Sprecheridentifikationssysteme, Sprecherklassifizierungssysteme) sind auf die Erkennung von charakteristischen Sprachmerkmalen ausgerichtet. Das Sprechererkennungssystem erkennt eine Person anhand charakteristischer Sprachmerkmale der Sprachäußerung. Die Technik der Sprechererkennung ähnelt in vieler Hinsicht der Spracherkennung, wodurch es fiir viele Anwendungsarten naheliegt, beide Funktionen in einem Gerät miteinander zu verbinden.

Bekannt sind Spracherkennungsalgorithmen (z.B. nuance communications, Lernout und Hauspie, Phillips, Siemens, Temic, Dragon Systems usw.), die eine größere Anzahl von Wörtern in Echtzeit erkennen können. Diese Algorithmen benutzten wahrscheinlichkeitstheoretische Ansätze und haben einige Vorteile gegenüber den üblichen Mustererkennungs-Algorithmen. Mehrere Muster pro Wort, eine spezielle Form der Musteranpassung und der Strategie fiir die Abstandsberechnung erleichtern bei diesem Algorithmus die Realisierung der Worterkennung für einen begrenzten Personenkreis. Die Arbeitsweise des o. a. Algorithmus lässt sich am besten von drei Grundfunktionen erläutern.
- Vorverarbeitung des Sprachsignals (Ableitung des Musters aus dem Sprachsignal)
- Trainieren (Erzeugen der Referenzmuster)
- Erkennung (wahrscheinlichkeitstheoretische Berechnung)

Werden derartige Algorithmen für die sprachgesteuerte Bedienung, beispielsweise der Funktionen eines Telekommunikationsendgerätes, benutzt, besteht das Problem der Identifizierung der konkreten Nutzer des begrenzten Personenkreises. Das kann ebenfalls sprachgesteuert, beispielsweise durch Erkennung und Vergleich des Inhaltes einer gesprochenen Ziffernfolge (Passwort, PIN) mit einer in einer Datenbank dem Sprecher zugeordneten Ziffernfolge (Passwort, PIN) geschehen.

Ein Beispiel für ein bekanntes Sprechererkennungssystem ist in EP-A-0 892 388 offenbart.

Nachteilig bei derartigen Lösungen ist, dass der Benutzer beim Dialog mit einem sprachgesteuerten Dialogsystem sich gegenüber dem Dialogsystem entweder mit seiner PIN ausweisen muss bzw. um einen Trainingsprozess für die Spracherkennung nicht herum kommt. Der Benutzer wird dabei um die Eingabe von vorher trainierten Befehlsworten gebeten. Erst danach kann der Benutzer beispielsweise die Dienste des von ihm angewählten sprachgesteuerten Dialogsystems benutzen. Die vom Kunden verlangte Prozedur zur Ausweisung des Kunden gegenüber dem System kann von Dialogsystem zu Dialogsystem unterschiedlich sein.

Dem erfindungsgemäßen Verfahren liegt die Aufgabe zugrunde, die o. g. Nachteile und den dabei auftretenden Zeitaufwand bei der Identifikation eines Sprechers/Anrufers aus einer begrenzten, einem Telekommunikationsanschluss zugeordneten Sprechergruppe zu vermeiden. Die Identifizierung des Sprechers/Anrufers soll dabei unter Einbeziehung des bekannten Prinzips der Sprecheridentifikation bzw. textunabhängiger Sprecherverifikation erfolgen, ohne dass der Nutzer bei jedem Anruf des Dialogsystems erneut eine dem o.g. Verfahren ähnliche Prozedur zur Verifikation seiner Person durchlaufen muss.

Gelöst wird diese Aufgabe durch die kennzeichnenden Merkmale des 1. Patentanspruchs. Vorteilhafte Ausgestaltungen sind den jeweiligen Unteransprüchen zu entnehmen.

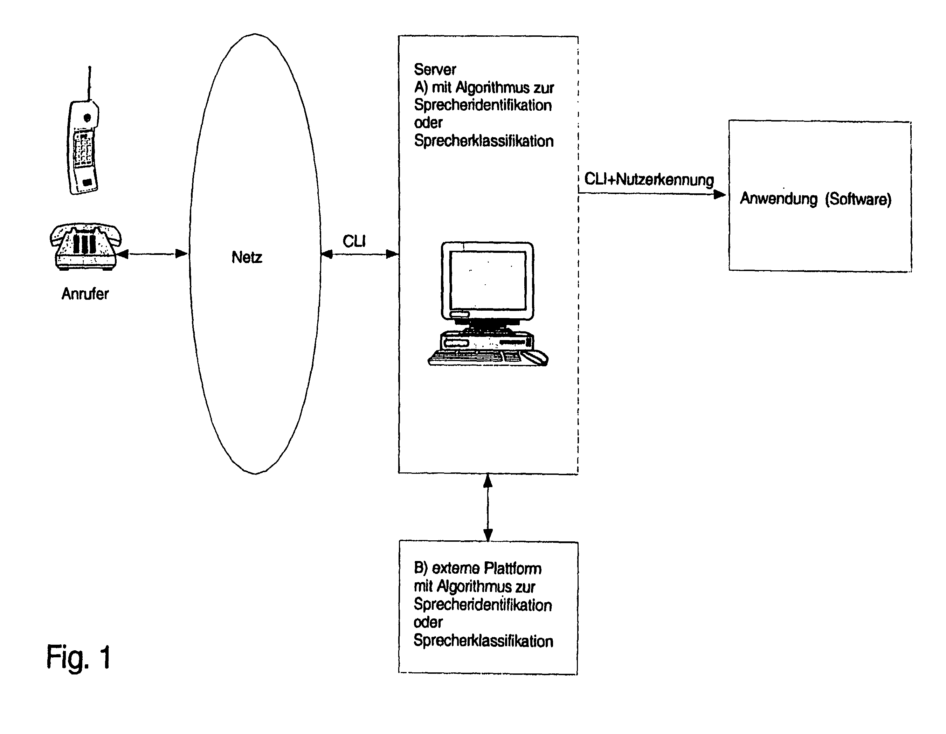

Figur 1 zeigt eine erfindungsgemässe Vorrichtung zur sprachgesteuerten Identifizierung eines Nutzers eines Telekommunikationsanschlusses.

Erfindungsgemäß wird nach Herstellung einer Verbindung über das Telekommunikationsnetz zuerst der Telekommunikationsanschluss des Anrufers anhand der Anschlusskennung, beispielsweise über CLI- oder ANI-Kennung, identifiziert. Sprachlichen Äußerungen während eines Begrüßungsdialogs zwischen dem Nutzer des anhand der CLI- oder ANI-Kennung identifizierten Telekommunikationsanschlusses und seinem Gesprächspartner, vorzugsweise einem sprachgesteuerten Dialogsystern, werden aufgezeichnet und einem Server in digitalisierter Form zur Verfügung gestellt. Vom Server werden die in digitalisierter Form vorliegenden sprachlichen Äußerungen des Anrufers einem dem Server zugeordneten Modul zur Sprechererkennung zur weiteren Bearbeitung zugeführt. Im Modul zur Sprechererkennung werden die sprachlichen Äußerungen mit den bereits für den identifizierten Telekommunikationsanschluss gespeicherten Referenzmustern des für diesen Telekommunikationsanschluss ausgewiesenen Personenkreises verglichen. Dieser Vorgang geschieht im Hintergrund, ohne dass der anrufende Kunde es primär wahrnimmt. Wird nach dem Vergleich mit den für diesen Telekommunikationsanschluss bereits während vor-hergehender Anrufe gespeicherten Referenzmustern eine innerhalb bestimmter Grenzen festzulegenden Ähnlichkeit zu einer dieser gespeicherten Referenzmustern festgestellt, dass für den konkreten Anrufer bereits ein Referenzmuster vorliegt, so wird eine für das Referenzmuster und damit für den identifizierten Anrufer gespeicherte Kennung aktiviert und zur CLI- bzw. ANI- Kennung hinzugefügt. Mittels der so erweiterten CLI- bzw. ANI-Kennung kann nunmehr nicht nur die Rufnummer des Anrufers vom Dialogsystem erkannt werden, sondern es kann auch der konkrete Anrufer eindeutig identifiziert werden. Damit ist es möglich, dass der Kunde vom Dialogsystem persönlich angesprochen werden kann, bzw. dass zur schnellen Erfüllung der Wünsche des Kunden vom Dialogsystem auf das für diesen Kunden anhand der vorhergehenden Sitzungen erstellte persönliche Nutzerprofil zugegriffen werden kann.

Wird nach Auswertung der Sprachmuster des Anrufers festgestellt, dass für diesen Anrufer noch kein anschlussbezogenes Referenzmuster vorliegt, so kann ein Sprachmuster des neuen Nutzers zum Anlegen eines weiteren Referenzmusters für den betreffenden Telekommunikationsanschluss benutzt werden bzw. der Nutzer wird um die Eingabe bestimmter Wortfolgen gebeten. Wenn sich bei einem emeuten Anruf des neuen Nutzers Unsicherheiten ergeben, so ist ein Nachtraining notwendig, d. h., der Nutzer wird erneut gebeten, bestimmte Wortfolgen einzugeben. Diese Wortfolgen werden mit den bereits gespeicherten Referenzmustern verglichen. Der Anrufer wird vom System nach seiner Identität abgefragt. Wenn der Nutzer die vom System vermutete Identität bestätigt, wird diese Bestätigungsäußerung dem bereits vorhandenen Referenzmuster zugefügt. Im Fall der Nutzung von Algorithmen der Sprecherklassifikation (Unterscheidung des Alters, Geschlecht an Hand der sprachlichen Äußerungen) können die Referenzmuster durch den Hersteller der Anlage vorkonfiguriert werden.

Da die Auswahl des Sprechers aus einer dem System bekannten, jedoch begrenzten Nutzergruppe erfolgt, ist mit einer hohen Identifikationssicherheit bzw. Klassifikationssicherheit zu rechnen.

Die erfindungsgemäße Lösung eignet sich insbesondere
- bei der Individualisierung von Mensch-Maschine-Dialogstrukturen,
- zur Unterscheidung der Sprecher während einer Audiokonferenz mit entsprechender Anzeige,
- zur Rechnungslegung für die Nutzer eines Telefonanschlusses und
- zur Darstellung von konkreten Kundendaten fiir einen Operatordienst.

In Abhängigkeit von den dem Kunden zur Verfügung stehenden Kommunikationsendgeräten sind im Rahmen der Erfindung neben der Sprecheridentifikation bzw. Sprecherklassifizierung durch sprachliche Äußerungen des Sprechers auch andere Verfahren zur Identifizierung des Anrufers möglich, wie beispielsweise Identifizierung mittels Fingerabdruck, Gesicht, Auge, Handschrift, Handform und Handabdruck oder mittels Tastaturbedienungsprofil. Voraussetzung sind jedoch immer entsprechend ausgebildete Kommunikationsendgeräte beim Kunden und die entsprechenden Erkennungssysteme bei den Systemen der Diensteanbieter.

## Patentansprüche

1. Verfahren zur sprachgesteuerten Identifizierung des Nutzers eines Telekommunikationsanschlusses im Telekommunikationsnetz beim Dialog mit einem sprachgesteuerten Dialogsystem unter Einbeziehung des Prinzips der Sprecheridentifikation, wobei nach Herstellung einer Telekommunikationsverbindung über das Telekommunikationsnetz der Telekommunikationsanschluss anhand seiner Anschlusskennung mittels Calling Line Identity (CLI)-oder Automatic Number Identification (ANI)-Kennung identifiziert wird,
**dadurch gekennzeichnet,**
- **dass** sprachliche Äußerungen des anrufenden Nutzers während eines Dialogs Mensch zu Mensch und/oder Mensch zu Maschine über ein Modul zur Sprecheridentifikation bzw. textunabhängigen Sprecherverifikation oder Sprecherklassifikation erfasst und mit den im Modul für den betreffenden Telekommunikationsanschluss bereits gespeicherten Referenzmustern verglichen werden, dass
a) bei Feststellung der Ähnlichkeit der sprachlichen Äußerungen des Nutzers mit einem bereits gespeicherten Referenzmuster eine für das ermittelte Referenzmuster gespeicherte Nutzerkennung aktiviert wird, die eine eindeutige Identifizierung des Nutzers erlaubt, und dass
b) bei einem noch nicht anhand seines Referenzmusters bekannten Nutzer des betreffenden Telekommunikationsanschlusses für diesen Nutzer sowohl ein neues Referenzmuster als auch eine neue Nutzerkennung erzeugt werden,
- **dass** die CLI- bzw. die ANI- Kennung des Telekommunikationsanschlusses des anrufenden Nutzers um die Nutzerkennung des identifizierten Nutzers erweitert wird, und
- **dass** bei einem Dialog des Nutzers mit dem sprachgesteuerten Dialogsystem nach Identifikation des Nutzers die CLI des Telekommunikationsanschlusses zusammen mit der Nutzerkennung des anrufenden Nutzers einem Server mit sprachgesteuertem Dialogsystem zur Verfügung gestellt wird, dass anhand der CLI mit Nutzerkennung bereits für diesen Nutzer gespeicherte Daten ermittelt und für die Dialogführung zur Verfügung gestellt werden, so dass anhand der vom Nutzer bekannten Daten eine individuelle Nutzerführung möglich ist, bei welcher der Nutzer persönlich angesprochen werden kann.

2. Verfahren nach Anspruch 1, dass jedem Nutzer eines Telekommunikationsanschlusses als Nutzerkennung ein Zahlencode zugeordnet wird.

## Claims

1. Method for the speech-controlled identification of the user of a telecommunications line in the telecommunications network in interactive dialogue with a speech-controlled interactive dialogue system with the inclusion of the principle of speaker identification, wherein, after the establishment of a telecommunications call via the telecommunications network, the telecommunications line is identified on the basis of its line identity by means of Calling Line Identity (CLI) or Automatic Number Identification (ANI) identification,
**characterized in that**
- speech utterances of the calling user during a human-to-human and/or human-to-machine dialogue are recorded via a module for speaker identification or text-independent speaker verification or speaker classification and are compared with reference samples already stored in the module for the respective telecommunications line; **in that**
a) if the speech utterances of the user are found to be similar to an already stored reference sample, a user identification which has been stored for the determined reference sample is activated, this permitting the unambiguous identification of the user; and **in that**
b) if the user of the respective telecommunications line is not yet known on the basis of his reference sample, both a new reference sample and also a new user identification are created for that user;
- the CLI or ANI identification of the telecommunications line of the calling user is extended to include the user identification of the identified user; and
- in the case of a dialogue of the user with the speech-controlled interactive dialogue system, after identification of the user the CLI of the telecommunications line is made available together with the user identification of the calling user to a server with speech-controlled interactive dialogue system, **in that** data already stored for that user on the basis of the CLI with user identification are determined and are made available for interactive dialogue prompting, so that, on the basis of the data known from the user, personalized user prompting is possible in which the user is able to be personally addressed.

2. Method according to claim 1, **characterized in that** each user of a telecommunications line is associated with a numerical code as user identification.

## Revendications

1. Procédé pour l'identification vocale de l'utilisateur d'une ligne de télécommunications du réseau de télécommunications lors du dialogue avec un système de dialogue vocal intégrant le principe d'identification de l'interlocuteur par lequel, après établissement d'une liaison de télécommunications sur le réseau de télécommunications, la ligne de télécommunications est identifiée à l'aide de son identification de ligne au moyen de l'identification de la ligne appelante (CLI) ou de l'identification automatique du numéro (ANI),
**caractérisé en ce que**
- les paroles de l'utilisateur appelant sont saisies pendant un dialogue de personne à personne et/ou de personne à machine avec un module dédié à l'identification de l'interlocuteur, la vérification de l'interlocuteur indépendamment du texte ou à la classification de l'interlocuteur avant d'être comparées aux échantillons de référence déjà enregistrés dans le module pour la ligne de télécommunications concernée, que
a) lors de la détermination de la similitude des paroles de l'utilisateur avec un échantillon de référence déjà enregistré, un code identificateur de l'utilisateur enregistré pour l'échantillon de référence est activé qui permet une identification nette de l'utilisateur, et que
b) dans le cas d'un utilisateur de la ligne de télécommunication concernée qui n'est pas encore connu par son échantillon de référence, un nouvel échantillon de référence et un nouveau code identificateur sont générés pour cet utilisateur;
- l'identification CLI ou ANI de la ligne de télécommunication de l'utilisateur appelant est étendue du code identificateur de l'utilisateur identifié et que
- lors d'un dialogue de l'utilisateur avec le système de dialogue vocal, après l'identification de l'utilisateur, l'identification CLI de la ligne de télécommunication avec le code identificateur de l'utilisateur appelant est mise à la disposition d'un serveur avec système de dialogue vocal, qu'avec l'identification CLI et le code identificateur de l'utilisateur, les informations déjà enregistrées pour cet utilisateur sont déterminées et mises à disposition pour le déroulement du dialogue, de sorte que les données d'utilisateur connues permettent une surface d'utilisateur individuelle grâce à laquelle on peut s'adresser à l'utilisateur de manière personnelle.

2. Procédé selon la revendication 1, **caractérisé en ce qu'**une identification numérique est attribué à chaque utilisateur d'une ligne de télécommunications.
